# EUROPEAN PATENT SPECIFICATION

(11) **EP 1 146 700 B1**
(45) Date of publication and mention of the grant of the patent: **21.04.2004**
(21) Application number: 01104409.6
(22) Date of filing: 26.02.2001
(51) Int. Cl.: H04L 12/58

(54) **Method for "unsending" electronic mail**
Verfahren zum Widerrufen elektronischer Post
Procédé pour annuler du courrier électronique

(30) Priority: 13.04.2000 US 549049
(43) Date of publication of application: 17.10.2001
(73) Proprietor: Northrop Grumman Corporation, Los Angeles, CA 90067-2199 (US)
(72) Inventor: Siegel, Neil G., Rancho Palos Verdes, CA 90274 (US)
(74) Representative: Schmidt, Steffen J., Dipl.-Ing.

(56) References cited:
- EP-A- 0 800 144
- EP-A- 0 869 639
- JP-A- 10 320 311
- "APPLICATION LEVEL NETWORK TRACKING ATTRIBUTE" IBM TECHNICAL DISCLOSURE BULLETIN, IBM CORP. NEW YORK, US, vol. 34, no. 6, 1 November 1991 (1991-11-01), pages 229-230, XP000228424 ISSN: 0018-8689

## Description

### BACKGROUND OF THE INVENTION

This invention relates generally to communication by electronic mail (e-mail) and, more particularly, to techniques for processing e-mail in computer networks. E-mail is widely used to transmit messages and data of various types through computer networks, including local area networks such as corporate intranets, and larger networks, such as the Internet. Once a message has been composed and a "send" button has been actuated, the messages will be delivered to each of the intended recipients automatically, provided that valid e-mail destination addresses have been used in the messages. Although automatic, delivery of e-mail is not instantaneous. A message may pass through a number of separate "server" computers before it reaches its final destination. The action of each server may be characterized as "store and forward," which is to say that each message is temporarily stored and then forwarded when the server has processing time and an appropriate communication channel available.

In some situations, an e-mail user would benefit from having an "unsend" operation. If, for example, the user sent a message to the wrong recipient, or forgot to include an important item in the message, he or she may wish to stop transmission of the message before it reaches the recipient or recipients. Computer users have become accustomed to having an "undo" button in various software packages, such as word processors and spreadsheets. If the user makes a mistake using this software, the mistake may be easily corrected by first pressing the "undo" button to reverse the previous operation initiated by the user. If the user presses the "undo" button too many times, or changes his or her mind about undoing an operation, there is often a "redo" button to reinstate an operation that has been inadvertently subject to the "undo" function.

EP 0 800 144 A2 discloses a method comprising the steps defined in the generic portion of claim 1. However, this method does not avoid that a recipient of an e-mail, for which "unsend" function is activated, can read that e-mail if the e-mail has been delivered to the recipient's mail client system. Further, the "unsend" function of this method does not ensure that only e-mails, for which actually an "unsend" function is activated, are hindered to be forwarded to the recipient.

### OBJECT OF THE INVENTION

The object of the present invention is to provide a solution of the above mentioned problems, specifically those of the method according to EP 0 800 144 A2.

### SUMMARY OF THE INVENTION

To solve this object, the present invention provides an e-mail "unsend" method according to claim 1 that may be added to existing conventional e-mail software systems. The method according to claim 1, for unsending an electronic mail (e-mail) message that has been sent from an e-mail user, comprises the steps of sending a first message from a sender mail client system to one or more recipient mail client systems, through a network including a sender mail server and a recipient mail server; detecting actuation of an unsend button in a sender mail dient system; and, upon detection of actuation of the unsend button, generating a duplicate of the first message. The method further includes inserting an unsend tag in the duplicate message; and transmitting the duplicate message to the same one or more recipients of the first message. The method further includes, in each mail server, detecting the presence of the unsend tag in the duplicate message and, if detected, deleting the duplicate message and, if the first message has not reached the recipients, automatically deleting the first message.

According to the present invention, the method includes the steps of detecting the presence of the unsend tag in a duplicate message received at a first-encountered mail server; validating the authenticity of the duplicate message by comparing selected portions of the duplicate message with the original message; and determining whether the original message is still in the server. If so, the original and duplicate messages are deleted, and if not, the duplicate message is forwarded to one or more additional servers along a path followed by the original message,

Similar steps are executed in any subsequently encountered server to which the duplicate message has been forwarded. If the duplicate message reaches a recipient mail client, the method includes the steps of deleting the duplicate and original messages only if the original message has not been read by the recipient.

Preferably, the method also includes sending an unsend confirmation message back to the sender whenever the original message has been successfully deleted and unsent; and sending a cannot-unsend message back to the sender whenever the original message cannot be successfully deleted and unsent.

It will be appreciated from the foregoing summary that the invention represents a significant advance in the field of communication over computer networks. In particular, the invention provides an unsend function for e-mail, similar to the undo functions available for other types of application software. Other aspects and advantages of the invention will become apparent from the following more detailed description, taken in conjunction with the accompanying drawings.

### BRIEF DESCRIPTION OF THE DRAWINGS

FIGURE 1 is block diagram showing the path of a typical e-mail message from a sender to a recipient; and
FIGS. 2A-2C are flowcharts depicting the principal operations performed in e-mail processing software to implement the "unsend" operation of the present invention.

### DESCRIPTION OF THE PREFERRED EMBODIMENT

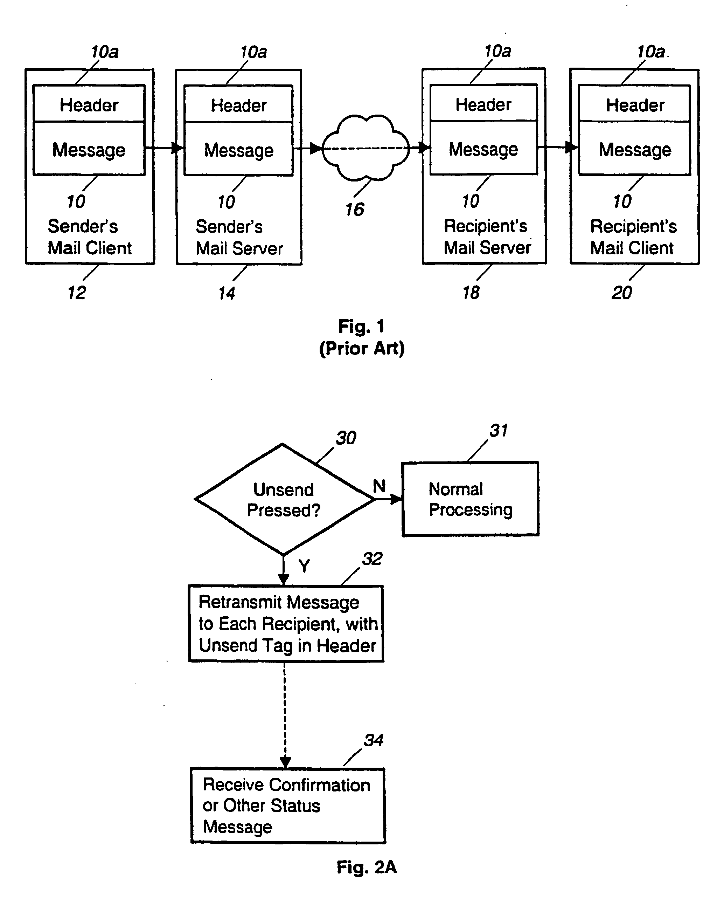

As shown in the drawings for purposes of illustration, the present invention pertains to electronic mail (e-mail) and the software for delivering e-mail from a sender to a recipient. As shown in FIG. 1, an e-mail user sending a message, composes each message, indicated by reference numeral 10, in a user computer referred to as the sender mail "client" computer 12. As is conventional, each message 10 includes a header 10a, containing information such as the sender's e-mail address, each recipient's e-mail address, the time the message was transmitted, and various other parameters uniquely defining the message.

After the sender presses (or clicks on) a "send" button, the message 10 is transmitted from the sender's mail client 12 to the sender's mail "server" 14. The sender's mail server 14 may be resident in a corporate computer, or it may be in a computer operated by the sender's Internet service provider (ISP). In the sender's mail server 14, the header of the message 10 is analyzed to determine the message destination, and the message is subsequently forwarded though a network 16 to another mail server, which in FIG. 1 is depicted as the recipient's mail server 18. Finally, the message 10 is transmitted from the recipient mail server 18 to a recipient mail client 20 operated by the recipient named in the message header 10a. It will be understood that the message 10 may name multiple recipients and that the message my then be processed through other multiple recipient mail servers 18 and recipient mail clients 20. It will also be understood that the message path through the network 16 may include one or more additional "hops" through additional, intermediate mail servers.

In accordance with the invention, transmission of an e-mail message is subject to termination if the sender chooses to invoke an "unsend" function. FIG. 2A-2C are flowcharts depicting the principal operations performed when an e-mail user invokes this unsend function. FIG. 2A shows the functions performed in the sender mail client 12. When the "unsend" button is not pressed, as determined in block 30, the client 12 continues normal processing, as indicated in block 31. If the "unsend" button is pressed, the client 12 retransmits, as shown in block 32, the same message to each designated recipient, but includes a special "unsend" tag in each message header 10a. The client 12 then waits for an incoming message, as indicated in block 34, confirming that the original message has been "unsent" or indicating that the message could not be "unsent."

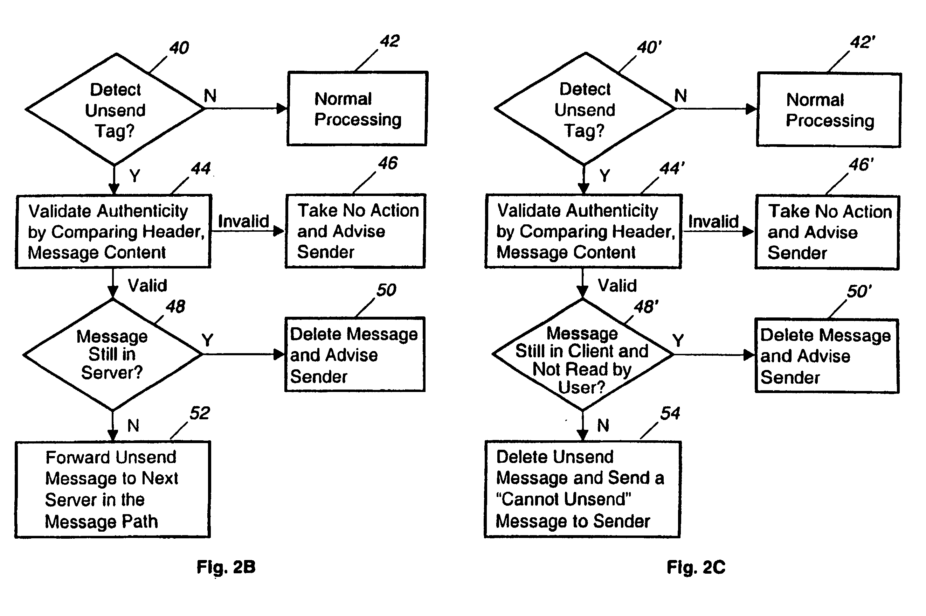

FIG. 2B shows the functions performed at the sender mail server 14, the recipient mail server 18 and any other intermediate mail server. First, the mail server checks for the presence of an "unsend" tag in the message header, as indicated in block 40. The absence of an "unsend" tag results in normal processing continuing in the server, as indicated in block 42.

If an unsend tag is detected, the server next validates the authenticity of the unsend message by comparing, as indicated in block 44, the header data and the message content of the unsend message with corresponding portions of the original message. If the unsend message is found to be invalid, i.e., if it cannot be matched with an earlier original message, the server takes no further action, as indicated in block 46, and advises the sender that no action was taken. If the original message is still in the server, as determined in block 48, and the unsend message is found to be valid, the original message and the unsend message are both deleted, as indicated in block 50, and an unsend confirmation is sent back to the sender. If the original message is no longer in the server, the unsend message is forwarded to the next mail server on the route to the designated destination, as indicated in block 52.

Operations performed in the recipient client 20 are slightly different, as shown in FIG. 2C. The unsend tag is detected, as indicated in block 40', and normal processing is resumed in block 42' is no unsend tag is detected. Validation is performed as indicated in block 44', and no action is taken (block 46') if the unsend message is found to be invalid. If the original message is found to be still present in the receipt mail client 20, but not yet read by the recipient, as determined in block 48', then the original and unsend messages are deleted (block 50') and the sender is advised accordingly. However, if the original message is no longer present or has already been read by the recipient, then only the unsend message is deleted and the sender is advised accordingly with a "cannot unsend" message," as indicated in block 54.

Based on the return messages received by the sender (block 34), the sender can determine which recipients, if any, still received the unsent message and which did not.

It will be appreciated from the foregoing that the present invention provides a previously unavailable but highly useful function for handling e-mail in a variety of contexts. The unsend function provides each user with the ability to cancel a message already sent but not yet read by the recipient or received at the recipient's mail client.

## Claims

1. A method for unsending an electronic mail (e-mail) message that has been sent from an e-mail user the method comprising the steps of:
- sending a first message from a sender mail client system to one or more recipient mail client systems, through a network including a sender mail server and a recipient mail server;
detecting actuation of an unsend button in a sender mail client system;
upon detection of actuation of the unsend button, generating a duplicate of the first message;
- inserting an unsend tag in the duplicate message;
- transmitting the duplicate message to the same one or more recipients of the first message; and
- in each mail server, detecting the presence of the unsend tag in a duplicate message and, if detected, deleting the duplicate message and, if the first message has not reached the recipients, automatically deleting the first message;
**characterized in that** the steps of detecting the unsend tag and deleting the original and duplicate messages includes:
- detecting the presence of the unsend tag in a duplicate message received at a first-encountered mail server;
- validating authenticity of the duplicate message by comparing selected portions of the duplicate message with the original message;
- determining whether the original message is still in the server and, if so, deleting the original and duplicate messages, and if not, forwarding the duplicate message to one or more additional servers along a path followed by the original message;
- repeating the foregoing steps in any server to which the duplicate message is forwarded; and
- if the duplicate message reaches a recipient mail client, deleting the duplicate and original messages only if the original message has not been read by the recipient.

2. A method as defined in claim 1, and further comprising:
- sending an unsend confirmation message back to the sender whenever the original message has been successfully deleted and unsent; and
- sending a cannot-unsend message back to the sender whenever the original message cannot be successfully deleted and unsent.

## Patentansprüche

1. Verfahren zum Widerrufen einer elektronischen Post-(E-Mail)-Nachricht, die von einem E-Mail-Benutzer gesendet wurde, wobei das Verfahren die Schritte umfasst:
- Senden einer ersten Nachricht von einem Mail-Client-System eines Absenders zu einem oder mehreren Mail-Client-Systemen von Empfängern über ein Netzwerk, das einen Absender-Mail-Server und einem Empfänger-Mail-Server aufweist,
- Detektieren einer Betätigung eines Widerrufsknopfs in einem Mail-Client-System des Absenders,
- Erzeugen eines Duplikats der ersten Nachricht beim Detektieren der Betätigung des Widerrufsknopfs,
- Einfügen einer Widerrufsmarkierung in die duplizierte Nachricht,
- Übertragen der duplizierten Nachricht zu dem gleichen einen oder mehreren Empfängern der ersten Nachricht, und
- Detektieren des Vorhandenseins der Widerrufsmarkierung in einer duplizierten Nachricht bei jedem Mail-Server und Löschen der duplizierten Nachricht bei der Detektion und automatisches Löschen der ersten Nachricht, wenn die erste Nachricht die Empfänger noch nicht erreicht hat,
**dadurch gekennzeichnet, dass** die Schritte, die Widerrufsmarkierung zu detektieren und die ursprünglichen und duplizierten Nachrichten zu löschen, umfassen:
- Detektieren des Vorhandenseins der Widerrufsmarkierung in einer duplizierten Nachricht bei einem zuerst erreichten Mail-Server,
- Validieren der Authentizität der duplizierten Nachricht durch Vergleich ausgewählter Teile der duplizierten Nachricht mit der ursprünglichen Nachricht,
- Feststellen, ob sich die ursprüngliche Nachricht weiter bei dem Server befindet und, wenn dem so ist, Löschen der ursprünglichen und duplizierten Nachrichten und, wenn dem nicht so ist, Weiterleiten der duplizierten Nachricht zu einem oder mehreren weiteren Server längs eines von der ursprünglichen Nachricht zurückgelegten Wegs,
- Wiederholen der vorherigen Schritte bei jedem Server, zu dem die duplizierte Nachricht weitergeleitet wird, und
- Löschen der duplizierten und ursprünglichen Nachrichten, wenn die duplizierte Nachricht einen Empfänger-Mail-Client erreicht, nur dann, wenn die ursprüngliche Nachricht nicht von dem Empfänger gelesen wurde.

2. Verfahren nach Anspruch 1 und ferner umfassend:
- Senden einer Widerrufsbestätigungsnachricht zurück zu dem Absender, wann immer die ursprüngliche Nachricht erfolgreich gelöscht und widerrufen wurde, und
- Senden einer Nachricht über einen nicht erfolgten Widerruf zurück zu dem Absender, wann immer die ursprüngliche Nachricht nicht erfolgreich gelöscht und widerrufen werden kann.

## Revendications

1. Procédé pour annuler un message par courrier électronique (email) envoyé par un utilisateur de courrier électronique, ce procédé comprenant les étapes de :
- envoi d'un premier message par un système client de courrier expéditeur à un ou plusieurs systèmes clients de courrier destinataire par l'intermédiaire d'un réseau comprenant un serveur de courrier expéditeur et un serveur de courrier destinataire ; détection de l'actionnement d'un bouton d'annulation dans un système client de courrier expéditeur ;
à la détection de l'actionnement d'un bouton d'annulation, production d'une copie du premier message ;
- insertion d'une étiquette d'annulation dans la copie du message ;
transmission de la copie du message au(x) même(s) destinataire(s) du premier message ; et
- dans chaque serveur de courrier, détection de la présence de l'étiquette d'annulation dans une copie du message et, si détectée, suppression de la copie du message et, si le premier message n'a pas atteint les destinataires, suppression automatique du premier message ; **caractérisé en ce que** les étapes de détection de l'étiquette d'annulation et de suppression du message original et de sa copie comprennent :
- la détection de la présence d'une étiquette d'annulation dans une copie du message reçue par le premier serveur de message rencontré ;
- validation de l'authenticité de la copie du message par comparaison de parties sélectionnées de la copie du message avec le message d'origine ;
- détermination si le message d'origine se trouve encore dans le serveur et, si tel est le cas, suppression du message d'origine et de sa copie, et si tel n'est pas le cas, transmission de la copie du message à un ou plusieurs serveurs supplémentaires en suivant un chemin emprunté par le message d'origine ;
- répétition des étapes précédentes dans chaque serveur auquel la copie du message est transmise ; et
- si la copie du message atteint un client de courrier destinataire, suppression de la copie du message et de l'original seulement si le message d'origine n'a pas été lu par le destinataire.

2. Procédé tel que défini à la revendication 1, et comprenant en outre :
- renvoi d'un message de confirmation d'annulation à l'expéditeur chaque fois que le message d'origine a été supprimé et annulé ; et
- renvoi d'un message d'impossibilité d'annulation à l'émetteur chaque fois que le message d'origine ne peut pas être supprimé ni annulé avec succès.
